# EUROPEAN PATENT SPECIFICATION

(11) **EP 0 500 186 B1**
(45) Date of publication and mention of the grant of the patent: **04.05.1994**
(21) Application number: 92200502.0
(22) Date of filing: 20.02.1992
(51) Int. Cl.: A01K 7/06

(54) **Valve for a drinker for livestock**
Ventil für Viehtränkbecken
Clapet pour abreuvoir pour animaux

(30) Priority: 20.02.1991 NL 9100299
(43) Date of publication of application: 26.08.1992
(73) Proprietor: L.S. Brouwers Stalinrichtingen B.V., NL-8912 AC Leeuwarden (NL)
(72) Inventor: Rauwerda, Reimer, NL-8914 AE Leeuwarden (NL)
(74) Representative: Smulders, Theodorus A.H.J., Ir.

(56) References cited:
- EP-A- 0 139 328
- DE-A- 3 704 959
- DE-C- 917 516
- FR-A- 2 578 149
- GB-A- 957 300
- US-A- 4 329 941

## Description

This invention relates to a valve for a drinker for livestock, comprising a substantially tubular valve body, control means for setting the water flow through the valve body, dirt collecting means, a valve member operable by an operating member and spring means urging the valve member into a position wherein the water flow is shut off.

Such a drinker valve is known for instance from EP-A-0139328 (Brouwers Stalinrichtingen B.V.). The known drinker valve comprises a tubular brass body with a plug secured therein by means of a cross screw at the end of the body that is directed towards the basin of the drinker in mounted position. The plug is provided with a central axial bore through which a brass operating pin for the valve member extends into the drinker. The operating pin further carries a valve member at the end extending into the valve body, which valve member cooperates, with interposition of an O-ring, with a valve seat formed on the plug. The valve member, which is likewise made of brass, is urged against the O-ring by a rust-resistant steel pressure spring mounted in the valve body. Further, a conical member is arranged in the valve body above the valve member and also above the pressure spring, the top of this conical member being directed towards the water supply pipe. By truncating, cutting off or sawing off the tip of the conical member to a greater or lesser extent, the water output can be set. Further, the conical member serves as a dirt collecting element. The known drinker valve can be mounted in a bore through a flange of the drinker by means of an external thread provided on the valve body and two nuts. The bore is in line with an oval aperture in the wall of the drinker.

A disadvantage of the known drinker valve is that it is not corrosion-resistant owing to the use of metal parts. In this connection, problems may also be caused by any medicines that have been added to the drinking water. Further, contact corrosion will develop as a result of the use of different metals in mutual contact, such as the brass valve member and the rust-resistant steel spring. Also, minerals contained in the water tend to precipitate on brass and the zinc of the brass is corroded by acids.

Another important disadvantage is that the known valve cannot be mounted or demounted without detaching the drinker from the wall. Further, the use of a screw for securing the plug requires an additional operation during pre-assembly of the drinker valve.

Finally, setting the water output by cutting off a tip of a conical member is inaccurate and irrevocable.

The object of the invention is to provide an improved drinker valve in which the above-mentioned drawbacks are obviated or limited. More generally, the object of the invention is to provide a robust and reliable drinker valve which can be manufactured in a simple manner at low cost and is simple to mount and demount, and which, if so desired, can be used in existing drinkers in replacement of the known drinker valves.

To that end, according to the invention, a drinker valve of the type described hereinabove is characterized in that the dirt collecting means have a cylindrical shell with a thickened portion clamp-fitting into the top part of the valve body and that the dirt collecting means comprise a tubular member extending coaxially in the top part of the shell, leaving clear a first narrow cylindrical chamber between the shell and the tubular member, which cylindrical chamber is closed at the bottom by a circumferential internal shoulder in the shell of the dirt collecting means and further communicates adjacent the top of the tubular member with the interior of the tubular member, which in turn communicates with a part of the valve body that is closed by the valve member in the inoperative position.

Hereinafter, one embodiment of the invention will be further described with reference to the accompanying drawings, in which:
Fig. 1 is a schematic longitudinal section of an example of a known drinker valve used in a drinker for pigs or calves;
Fig. 2 is a schematic longitudinal section of one embodiment of a drinker valve according to the invention;
Figs 3, 4 and 5 schematically show, respectively, a side elevation, a front elevation and a top plan view of an embodiment of a control member for the water output of a drinker valve according to the invention; and
Fig. 6 is a top plan view of a connecting piece for a drinker valve according to the invention.

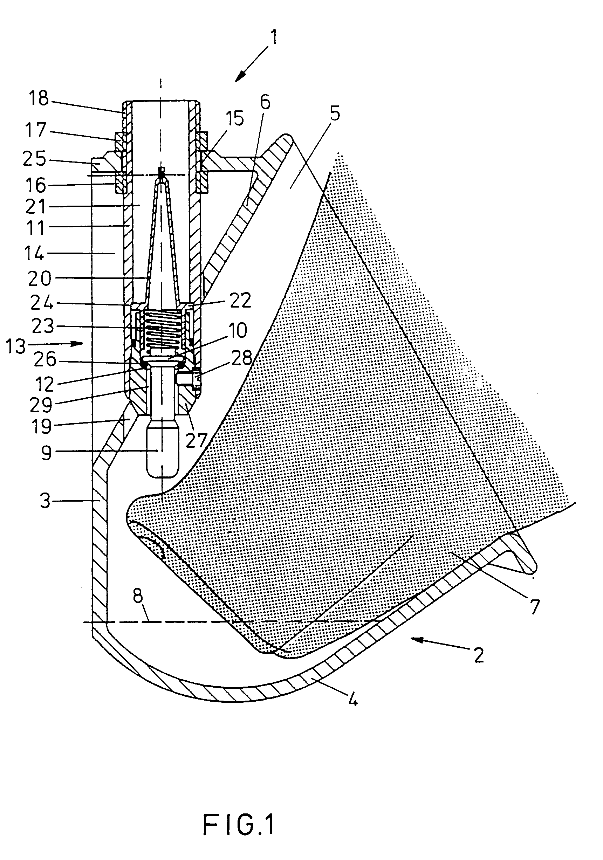

Fig. 1 is a schematic section of an example of a known drinker valve 1 which is mounted in a drinker 2 for livestock, such as pigs or calves. The drinker 2 is of a known type, comprising a rear wall 3 and a basin 4 extending from the rear wall towards the front. The basin 4 is part of an element directed towards the front and obliquely upwards, closed roundabout and having sidewalls, one of which is shown at 5, and a top wall 6. By way of example, a pig's snout 7 is shown in the drinker. The water level is indicated at 8.

When an animal finds the water level in the drinker to be too low, it can push a brass operating pin 9 of the drinker valve towards the rear or the side with its snout. As a result, the valve member 10, which is located at the end of the operating pin that extends into the valve body 11, will tilt relative to a valve seat 12 so that water can pass along the valve member.

The drinker comprises a flange 25 of substantially horizontal extension in mounted position, extending rearwards from the top wall adjacent the top edge thereof. Thus, a space 13 of substantially triangular section is formed between the top wall 6 and the flange. This space is closed by sidewalls, one of which is indicated at 14.

The flange 25 comprises a bore 15 in which the drinker valve is mounted by means of nuts 16, 17 which are screwed onto the external thread 18 of the tubular valve body 11, made of brass, above and under the flange 25. It can be clearly seen that the nut 16 is accessible only if the drinker is not mounted on a wall. The valve can only be replaced when the drinker has been demounted from the wall.

In the top wall 6 of the drinker, an aperture 19 is provided in line with the bore 15. The drinker valve extends through aperture 19 into the drinker. It is observed here that the aperture must be elongated owing to the inclined position of the top wall relative to the valve.

Via the free top end of the thread 18, the drinker valve can be connected to a water mains by means of a union nut.

Arranged in the drinker valve body is a conical member 20 having its tip cut off so that a water passage is obtained, allowing water to flow into the interior of the conical member. The space 21 roundabout the conical member functions as a dirt collecting element.

Via a lower collar 22 of the conical member, this conical member is urged against an internal shoulder 24 of the valve body by means of a rust-resistant steel pressure spring 23.

The lower end of the pressure spring urges the valve member 10 against the valve seat 12 with interposition of a sealing ring 26, for instance an O-ring.

The valve seat is formed in a plug 27 which is mounted at the lower end of the valve body 11 and secured by means of a screw 28. The operating pin 9 extends through a wide bore 29 in the plug, so that there is room to tilt the operating pin slightly. At the same time, water can flow into the basin via the wide bore.

The maximum water flow is determined by the aperture in the conical member and can be modified by cutting more off the top of the cone. This does not permit an accurate setting, nor can the water passage be reduced if such is desired.

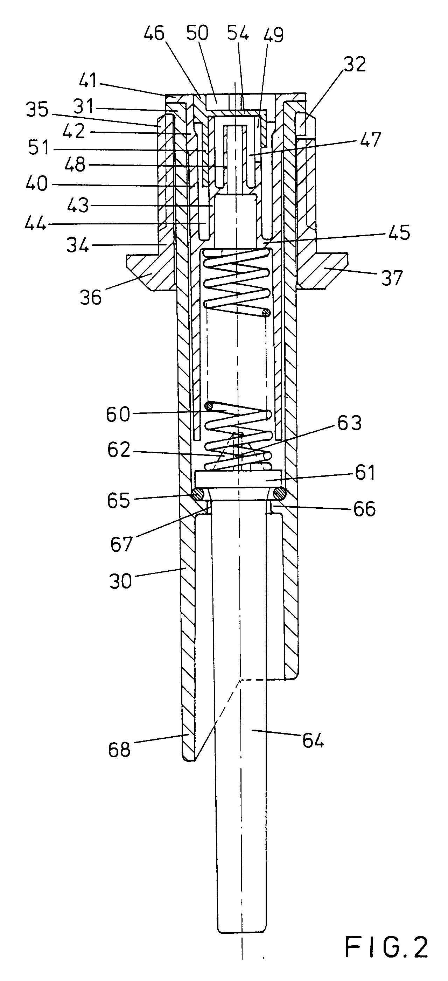

Fig. 2 is a schematic longitudinal section of an embodiment of a drinker valve according to the invention.

In the first place, the drinker valve according to the invention is different from the known valve in that it is substantially made of plastics. A suitable plastics is for instance polyacetal.

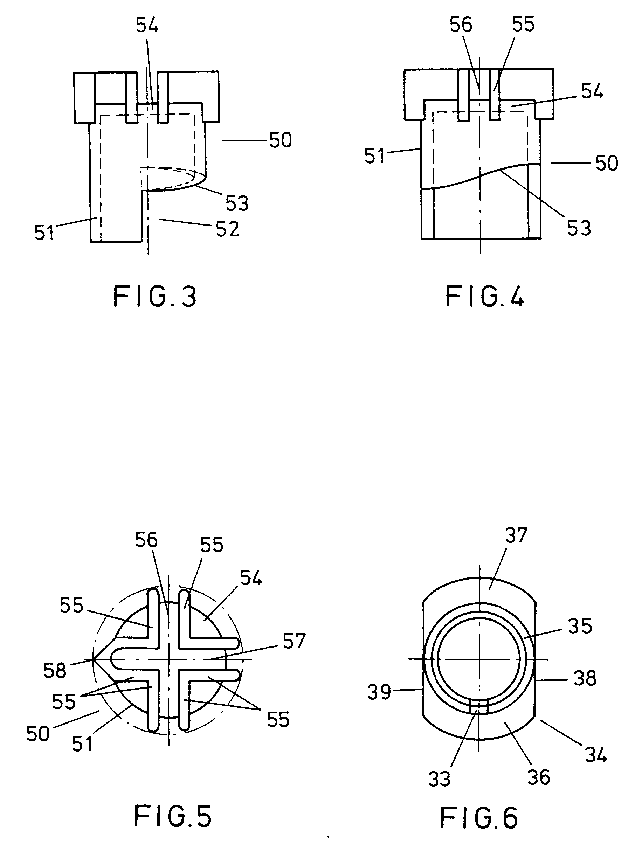

The drinker valve shown comprises a tubular plastics valve body 30 having a collar 31 at the top thereof. The collar comprises a depending projection 32. In mounted position, the projection 32 engages with a corresponding recess 33 of a connecting piece 34, shown in top plan view in Fig. 6. The connecting piece can be made of metal, for instance brass, but does not come into contact with the water. The connecting piece fits tightly around the body 30, which for that purpose may be fitted with low longitudinal ribs (not shown) in the area below the collar 31. The connecting piece comprises external thread 35 which, in mounted position of the valve, cooperates with a fastening nut comparable to the nut 17 of Fig. 1 and with a union nut of an end of a water supply pipe.

Adjacent the lower end, the connecting piece comprises two opposite flanges 36, 37. The flanges can be seen as parts of a circumferential collar from which segments have been removed on opposite sides. This design makes it possible to insert the body 30 with the connecting piece 34 clamp-fitted thereon via the elongated aperture 19 in the top wall of a drinker (see Fig. 1) through the bore 15 in the upper flange 25 of the drinker. Then a securing nut, such as nut 17, can be mounted. The connecting piece cannot rotate relative to the body owing to the projection 32 which engages with the recess 33. If so desired, rotation of the assembly of body and connecting piece can be prevented by providing projections at the underside of the flange 25 of the drinker, which projections cooperate with the flat sides 38, 39 of the connecting piece so as to prevent rotation.

As all other parts of the drinker valve according to the invention can be mounted in the body 30 beforehand, the valve can be mounted on a drinker without requiring detachment of the drinker itself from a wall or the like.

Inserted from the top into the body 30 is a dirt collecting element comprising a cylindrical shell 40 and a collar 41 resting in mounted position on the collar 31 of the body, the collar 41 having substantially the same external diameter as the collar 31. The shell 40 fits into the body 30 with some clearance, except for a thickened part 42 right under the collar 41. This part 42 fits tightly into the body 30.

The dirt collector comprises a tubular member 43 which extends adjacent the top end of the dirt collector within the shell and coaxially therewith. Located between the shell and the tubular member is a narrow cylindrical chamber 44 which is open at the top and closed at the bottom by a collar 45 connecting to the internal wall of the shell.

The top of the tubular member is disposed lower than the top of the collar 41, so that there is room for mounting a control valve 46 to be further described hereinafter.

Located within the tubular member 43 - while leaving clear a second narrow cylindrical chamber 47 closed at the bottom - is a second tubular member 48 of which the bottom and top ends are open and of which the top end is located lower than the top end of the first tubular member.

The dirt collector is preferably formed as one whole from plastics, for instance by injection moulding.

Provided in the wall of the first tubular member is a slit 49, extending vertically in this example, this slit 49 forming a connection between the first and the second cylindrical chambers.

Mounted on the first tubular member 43 is a control valve 50, which is made of plastics and is shown in detail in Figs 3-5. The control valve has the shape of an inverted cup whose shell 51 fits tightly yet rotatably about the tubular member 43. A portion of the shell adjacent the open side of the cup has been removed over a part of the circumference of the cup, as indicated at 52. The curved edge 53 formed at that point lies in a plane that may or may not be curved and which does not extend perpendicularly to the axis of the cup. Accordingly, in front elevation the edge 53 may be a straight inclined line or a curved line. In the embodiment shown, the edge 53 follows a helical line, as can be seen most clearly in the front elevation of Fig. 4.

In mounted position of the control valve, the edge 53 is located adjacent the vertical slit 49. Rotation of the control valve 50 enables variation of the passage between the chamber 47 and the chamber 44, formed by the part of the slit that is left clear, and hence of the amount of water that can pass through the slit per unit time.

The bottom 54 of the inverted cup shape rests on the top edge of the first tubular member 43, so that water supplied via the water supply pipe (not shown) cannot flow directly into the inner chamber 47.

At the top, the control valve comprises a plurality of radial projections, which fit precisely within the shell 40 of the dirt collector, in such a manner that the control valve is rotatable within the shell 40. The projections moreover continue on the bottom 54 in the form of ribs 55 which enable the control valve to be rotated in a simple manner. In the embodiment shown, the ribs together form two intersecting grooves 56, 57, which can for instance receive a coin for rotating the valve. In the embodiment shown, the tops of the ribs 55 are substantially in the same plane as the top of the collar 41, but this is not strictly necessary. Further, in the embodiment shown two ribs form an arrowhead 58, which indicates the position of the control valve. In this connection, the top of the collar 41 may be provided with corresponding markings.

Water can pass the control valve and the dirt collector as follows. Water that is being supplied via the water supply pipe flows via the grooves 56, 57 and the gap left clear between the shell 51 of the control valve and the shell 40 of the dirt collector into the outer chamber 44 until the level has risen to the point where the water flows via the vertical slit into the inner chamber 47. Upon further supply of water, the water rises to the lower level of the top of the second tubular member 48, whereafter the water flows into the second tubular member. The second tubular member is open at the bottom, so that the water can flow further into the valve body.

Dirt contained in the water supplied can collect in the chambers 44 and 47.

Arranged within the lower part of the shell 40 of the dirt collector is a rust-resistant steel helical spring 60 trapped between the collar 45 on the one hand and a valve disc 61. The valve disc is made of plastics and comprises means for centering the helical spring on the valve disc. In the embodiment shown, the centering means comprise two triangular projections 62, 63, extending transversely to each other, the tops coinciding with each other and with the long axis H of the valve disc and the operating pin 64 which forms one whole therewith. In the embodiment shown, the valve disc 61 rests on a valve seat formed by a shoulder 66 in the valve body 30, with interposition of an O-ring 65. However, if the valve seat and the lower end of the valve body are accurately designed, the O-ring can be omitted, as experiments have shown.

The operating pin, leaving clear an annular gap, extends through the aperture 67 left clear by the shoulder 66, beyond the lower end of the valve body 30.

In the embodiment shown, the valve body comprises a depending tab 68 on the side thereof which in mounted position is directed towards the access side of the drinker, i.e., the valve body is shorter at the back than at the front, which gives greater freedom of movement to the operating pin.

Compared with the known drinker valve, the valve seat of a drinker valve according to the invention can be located relatively high in the valve body inasmuch as the dirt collector and the control valve occupy relatively little space and the spring 60 is partly located within the shell of the dirt collector. As a consequence, the operating pin can be made relatively long and hence its operation requires very little effort. A drinker valve according to the invention is therefore very suitable for young animals.

Easy operation can be further improved by designing the valve disc to have a diameter which is only very little greater than the diameter of the aperture formed by the shoulder and to provide the valve disc with radial projections ensuring good positioning and support of the valve disc. In that case, only a small amount of travel of the operating pin will bring about a relatively large water discharge.

It is observed that after the foregoing, various modifications will readily occur to the skilled worker. Thus, the shell of the dirt collector could for instance be shorter at the lower end or the tab 68 at the lower end of the valve body could be longer or shorter. Further, projections may be provided limiting the rotation of the control valve.

These and similar modifications are considered to fall within the framework of the invention.

## Claims

1. A valve for a drinker for livestock, comprising a substantially tubular valve body (30), control means for setting the water flow through the valve body, dirt collecting means, a valve member (61) operable by an operating member (64) and spring means (60) urging the valve member into a position wherein the water flow is shut off, characterized in that the dirt collecting means have a cylindrical shell (40) with a thickened portion clamp-fitting into the top part of the valve body and that the dirt collecting means comprise a tubular member (43) extending coaxially in the top part of the shell, leaving clear a first narrow cylindrical chamber (44) between the shell and the tubular member, which cylindrical chamber is closed at the bottom by a circumferential internal shoulder (45) in the shell of the dirt collecting means and further communicates adjacent the top of the tubular member with the interior of the tubular member, which in turn communicates with a part of the valve body that is closed by the valve member in the inoperative position.

2. A drinker valve according to claim 1, characterized in that the dirt collecting means are made of plastics.

3. A drinker valve according to claim 1 or 2, characterized in that the tubular member (43) extends up to a point under the top edge of the shell (40) and that a substantially inverted-cup shaped control valve (50) is mounted on the tubular member, the bottom of said control valve (50) resting on the top edge of the tubular member and the shell of said control valve fitting precisely yet rotatably around the tubular member (43), leaving a slit-shaped access opening to the cylindrical chamber (44), while the tubular member comprises an access opening which is cleared by the shell of the control valve to a greater or lesser extent, depending on the rotational position of the control valve.

4. A drinker valve according to claim 3, characterized in that a sector (52) of the shell of the control valve (50) has been removed along a line that does not extend transversely to the axis of the shell of the control valve and that the passage in the wall of the tubular member is a slit (49), while the shell of the control valve, at the point thereof where a sector thereof has been partly removed, cooperates with the slit (49) to determine the water flow therethrough.

5. A drinker valve according to claim 4, characterized in that the slit (49) is a substantially vertical slit.

6. A drinker valve according to any one of the preceding claims, characterized in that a second tubular member (48) is located within the tubular member (43), while leaving clear a second narrow cylindrical chamber (47) closed at the bottom, said second tubular member (48) being open at the bottom and top ends and having its top at least partly located lower than the top of the first tubular member (43).

7. A drinker valve according to any one of the preceding claims 3-6, characterized in that the control valve (50) is made of plastics.

8. A drinker valve according to any one of the preceding claims 3-6, characterized in that the control valve (50) is provided at the top thereof with operating means for rotating the control valve.

9. A drinker valve according to claim 8, characterized in that the operating means comprise a plurality of raised ribs (55) extending over the top of the control valve.

10. A drinker valve according to claim 9, characterized in that at least two parallel ribs (55) are provided, together forming a groove (56,57).

11. A drinker valve according to claim 9 or 10, characterized in that the ribs (55) form position marking means which cooperate with markings provided on the upper edge of the shell of the dirt collecting means.

12. A drinker valve according to any one of the preceding claims, characterized in that the valve body (30) comprises a collar (31) at the top edge thereof and that a collar (41) formed on the top edge of the shell of the dirt collecting means rests on the collar (31) of the valve body.

13. A drinker valve according to any one of the preceding claims, characterized in that the valve body (30) comprises a shoulder (66) extending circumferentially under the lower end of the shell of the dirt collecting means, the shoulder (66) forming a valve seat for a valve disc (61) resting on the shoulder, which disc is urged against the valve seat by spring means (60).

14. A drinker valve according to claim 13, characterized in that the spring means (60) comprise a pressure spring (60) arranged between the valve disc (61) and the bottom of the first narrow cylindrical chamber (45).

15. A drinker valve according to claim 13 or 14, characterized in that the valve disc (61) at the top thereof comprises centering means (62,63) for the pressure spring (60).

16. A drinker valve according to any one of claims 13-15, characterized in that the valve disc (61) comprises an operating pin (64) extending through the aperture left clear by the shoulder (66) and beyond the lower end of the valve body.

17. A drinker valve according to claim 16, characterized in that the valve disc (61) and the operating pin (64) are formed as one whole from plastics.

18. A drinker valve according to any one of claims 13-17, characterized in that the valve disc (61) is provided with radial projections (62,63).

19. A drinker valve according to any one of the preceding claims, characterized in that the lower end of the valve body (30) comprises a depending tab (68) on the side directed towards the front of the drinker in mounted position.

20. A drinker valve according to any one of the preceding claims, characterized in that the valve body (30) is made of plastics.

21. A drinker valve according to any one of the preceding claims, characterized in that adjacent the top of the valve body (30) a cylindrical externally threaded connecting piece (34) is tight-fitted about the valve body, said connecting piece comprising two outwardly extending opposite flanges (36,37) at the bottom thereof.

22. A drinker valve according to claim 21, characterized in that the connecting piece (34) has a recess (33) in the top edge thereof, which recess cooperates with a projection (32) of the valve body to restrain the connecting piece from rotation.

23. A drinker valve according to claim 21, characterized in that at least the top part of the valve body (30) comprises low longitudinal ribs.

24. A drinker valve according to claim 21, characterized in that the valve body (30), the dirt collecting means, the valve member (61), and the operating member (64) are made of plastics and the connecting piece (34) is made of brass.

## Patentansprüche

1. Ein Ventil für eine Tränke für Vieh, umfassend einen im wesentlichen rohrförmigen Ventilkörper (30), ein Steuermittel zum Einstellen des Wasserflusses durch den Ventilkörper, Schmutzsammelmittel, ein Ventilteil (61), das mittels eines Betätigungsteils (64) betätigbar ist, und ein Federmittel (60), welches das Ventilteil in eine Position drängt, worin der Wasserfluß unterbrochen ist, dadurch **gekennzeichnet,** daß die Schmutzsammelmittel einen zylindrischen Mantel (40) mit einem verdickten Teil, der im Klemmsitz in dem oberen Teil des Ventilkörpers ist, haben, und daß die Schmutzsammelmittel ein rohrförmiges Teil (43) umfassen, das sich koaxial in dem oberen Teil des Mantels erstreckt, wobei es eine erste beschränkte zylindrische Kammer (44) zwischen dem Mantel und dem rohrförmigen Teil freiläßt, welche zylindrische Kammer an dem Boden durch eine umfängliche innere Schulter (45) in dem Mantel der Schmutzsammelmittel geschlossen ist und weiter benachbart dem oberen Ende des rohrförmigen Teils mit dem Inneren des rohrförmigen Teils in Verbindung steht, welches seinerseits mit einem Teil des Ventilkörpers in Verbindung steht, der durch das Ventilteil in der inoperativen Position geschlossen ist.

2. Ein Tränkenventil gemäß Anspruch 1, dadurch **gekennzeichnet,** daß die Schmutzsammelmittel aus Kunststoff hergestellt sind.

3. Ein Tränkenventil gemäß Anspruch 1 oder 2, dadurch **gekennzeichnet,** daß sich das rohrförmige Teil (43) bis zu einer Stelle unter dem oberen Rand des Mantels (40) erstreckt, und daß ein im wesentlichen umgekehrt becherförmiges Steuerventil (50) auf dem rohrförmigen Teil angebracht ist, wobei der Boden des Steuerventils (50) auf dem oberen Rand des rohrförmigen Teils ruht und der Mantel des Steuerventils genau, dennoch drehbar, um das rohrförmige Teil (43) paßt, wobei er eine schlitzförmige Zugangsöffnung zu der zylindrischen Kammer (44) läßt, während das rohrförmige Teil eine Zugangsöffnung umfaßt, welche durch den Mantel des Steuerventils in einem größeren oder geringeren Ausmaß, abhängig von der Drehposition des Steuerventils, freigegeben wird.

4. Ein Tränkenventil gemäß Anspruch 3, dadurch **gekennzeichnet,** daß ein Sektor (52) des Mantels des Steuerventils (50) längs einer Linie entfernt worden ist, die sich nicht quer zu der Achse des Mantels des Steuerventils erstreckt, und daß der Durchgang in der Wand des rohrförmigen Teils ein Schlitz (49) ist, während der Mantel des Steuerventils an der Stelle desselben, wo ein Sektor desselben teilweise entfernt worden ist, mit dem Schlitz (49) zusammenwirkt, um den Wasserfluß da hindurch zu bestimmen.

5. Ein Tränkenventil gemäß Anspruch 4, dadurch **gekennzeichnet,** daß der Schlitz (49) ein im wesentlichen vertikaler Schlitz ist.

6. Ein Tränkenventil gemäß irgendeinem der vorhergehenden Ansprüche, dadurch **gekennzeichnet,** daß sich ein zweites rohrförmiges Teil (48) innerhalb des rohrförmigen Teils (43) befindet, während es eine zweite beschränkte zylindrische Kammer (47) freiläßt, die an dem Boden geschlossen ist, wobei das zweite rohrförmige Teil (48) an dem Boden- und Kopfende offen ist und sich dessen oberes Ende wenigstens teilweise niedriger als das obere Ende des ersten rohrförmigen Teils (43) befindet.

7. Ein Tränkenventil gemäß irgendeinem der vorhergehenden Ansprüche 3-6, dadurch **gekennzeichnet,** daß das Steuerventil (50) aus Kunststoff hergestellt ist.

8. Ein Tränkenventil gemäß irgendeinem der vorhergehenden Ansprüche 3-6, dadurch **gekennzeichnet,** daß das Steuerventil (50) an dem oberen Ende desselben mit Betätigungsmitteln zum Drehen des Steuerventils versehen ist.

9. Ein Tränkenventil gemäß Anspruch 8, dadurch **gekennzeichnet,** daß die Betätigungsmittel eine Mehrzahl von erhöhten Rippen (55) umfassen, die sich über das obere Ende des Steuerventils erstrecken.

10. Ein Tränkenventil gemäß Anspruch 9, dadurch **gekennzeichnet,** daß wenigstens zwei parallele Rippen (55) vorgesehen sind, die zusammen eine Nut (56, 57) bilden.

11. Ein Tränkenventil gemäß Anspruch 9 oder 10, dadurch **gekennzeichnet,** daß die Rippen (55) Positionsmarkierungsmittel bilden, welche mit Markierungen zusammenwirken, die auf dem oberen Rand des Mantels der Schmutzsammelmittel vorgesehen sind.

12. Ein Tränkenventil gemäß irgendeinem der vorhergehenden Ansprüche, dadurch **gekennzeichnet,** daß der Ventilkörper (30) einen Bund (31) an dem oberen Rand desselben umfaßt, und daß ein Bund (41), der auf dem oberen Rand des Mantels der Schmutzsammelmittel ausgebildet ist, auf dem Bund (31) des Ventilkörpers ruht.

13. Ein Tränkenventil gemäß irgendeinem der vorhergehenden Ansprüche, dadurch **gekennzeichnet,** daß der Ventilkörper (30) eine Schulter (66) umfaßt, die sich umfänglich unter dem unteren Ende des Mantels der Schmutzsammelmittel erstreckt, wobei die Schulter (66) einen Ventilsitz für eine Ventilscheibe (61) bildet, die auf der Schulter ruht, welche Scheibe mittels Federmitteln (60) gegen den Ventilsitz gedrängt wird.

14. Ein Tränkenventil gemäß Anspruch 13, dadurch **gekennzeichnet,** daß die Federmittel (60) eine Druckfeder (60) umfassen, die zwischen der Ventilscheibe (61) und dem Boden der ersten beschränkten zylindrischen Kammer (45) angeordnet ist.

15. Ein Tränkenventil gemäß Anspruch 13 oder 14, dadurch **gekennzeichnet,** daß die Ventilscheibe (61) an dem oberen Ende derselben Zentrierungsmittel (62, 63) für die Druckfeder (60) umfaßt.

16. Ein Tränkenventil gemäß irgendeinem der Ansprüche 13-15, dadurch **gekennzeichnet,** daß die Ventilscheibe (61) einen Betätigungsstift (64) umfaßt, der sich durch die von der Schulter (66) freigelassene Öffnung und über das untere Ende des Ventilkörpers hinaus erstreckt.

17. Ein Tränkenventil gemäß Anspruch 16, dadurch **gekennzeichnet,** daß die Ventilscheibe (61) und der Betätigungsstift (64) als ein Ganzes aus Kunststoff ausgebildet sind.

18. Ein Tränkenventil gemäß irgendeinem der Ansprüche 13-17, dadurch **gekennzeichnet,** daß die Ventilscheibe (61) mit radialen Vorsprüngen (62, 63) versehen ist.

19. Ein Tränkenventil gemäß irgendeinem der vorhergehenden Ansprüche, dadurch **gekennzeichnet,** daß das untere Ende des Ventilkörpers (30) einen herabhängenden Vorsprung (68) auf der Seite umfaßt, die nach der Vorderseite der Tränke zu in der montierten Position gerichtet ist.

20. Ein Tränkenventil gemäß irgendeinem der vorhergehenden Ansprüche, dadurch **gekennzeichnet,** daß der Ventilkörper (30) aus Kunststoff hergestellt ist.

21. Ein Tränkenventil gemäß irgendeinem der vorhergehenden Ansprüche, dadurch **gekennzeichnet,** daß benachbart dem oberen Ende des Ventilkörpers (30) ein zylindrisches, außen mit Gewinde versehenes Verbindungsteil (34) straff um den Ventilkörper sitzt, wobei das Verbindungsteil zwei sich nach auswärts erstreckende entgegengesetzte Flansche (36, 37) an dem Boden desselben umfaßt.

22. Ein Tränkenventil gemäß Anspruch 21, dadurch **gekennzeichnet,** daß das Verbindungsteil (34) eine Ausnehmung (33) in dem oberen Rand desselben hat, welche Ausnehmung mit einem Vorsprung (32) des Ventilkörpers zusammenwirkt, um das Verbindungsteil gegen Drehung zu arretieren.

23. Ein Tränkenventil gemäß Anspruch 21, dadurch **gekennzeichnet,** daß wenigstens der obere Teil des Ventilkörpers (30) niedrige Längsrippen umfaßt.

24. Ein Tränkenventil gemäß Anspruch 21, dadurch **gekennzeichnet,** daß der Ventilkörper (30), die Schmutzsammelmittel, das Ventilteil (61) und das Betätigungsteil (64) aus Kunststoff hergestellt sind und das Verbindungsteil (64) aus Messing hergestellt ist.

## Revendications

1. Vanne pour abreuvoir à bétail, comportant un corps de vanne (30) essentiellement tubulaire, un moyen de contrôle en vue de régler le débit d'eau traversant le corps de vanne, des moyens de collecte d'impuretés, un membre de vanne (61) pouvant être actionné par un membre d'actionnement (64) et un moyen à ressort (60) repoussant le membre de vanne en une position où l'écoulement d'eau est interrompu, caractérisée en ce que les moyens de collecte d'impuretés possèdent une coquille cylindrique (40) avec une partie épaissie s'adaptant à serrage dans la partie supérieure du corps de vanne, et en ce que les moyens de collecte d'impuretés comportent un membre tubulaire (43) s'étendant coaxialement dans la partie supérieure de la coquille, laissant libre une première chambre cylindrique étroite (44) entre la coquille et le membre tubulaire, cette chambre cylindrique étant fermée à sa base par un épaulement cylindrique intérieur (45) de la coquille des moyens de collecte d'impuretés, et en outre communique au voisinage du sommet de l'élément tubulaire avec l'intérieur du membre tubulaire, qui à son tour communique avec une partie du corps de vanne qui est refermée par le membre de vanne dans la position inactive.

2. Vanne à abreuvoir selon la revendication 1, caractérisée en ce que les moyens de collecte d'impuretés sont réalisés en plastique.

3. Vanne à abreuvoir selon la revendication 1 ou 2, caractérisée en ce que le membre tubulaire (43) s'étend jusqu'en un point situé en dessous du bord supérieur de la coquille (40), et en ce qu'une vanne de contrôle (50) essentiellement en forme de cuvette inversée est montée sur le membre tubulaire, la base de ladite vanne de contrôle (50) reposant sur le bord supérieur du membre tubulaire, et la coquille de ladite vanne de contrôle s'adaptant précisément tout en pouvant tourner autour du membre tubulaire (43), en laissant une ouverture d'accès en forme de fente vers la chambre cylindrique (44), tandis que le membre tubulaire comporte une ouverture d'accès qui est libérée dans une mesure plus ou moins grande par la coquille de la vanne de contrôle suivant la position de rotation de la vanne de contrôle.

4. Vanne à abreuvoir selon la revendication 3, caractérisée en ce qu'un secteur (52) de la coquille de la vanne de contrôle (50) a été enlevée suivant une ligne qui ne s'étend pas transversalement par rapport à l'axe de la coquille de la vanne de contrôle, et en ce que le passage dans la paroi du membre tubulaire est une fente (49), tandis qu'au point de la coquille ou de la vanne de contrôle où un secteur leur a été partiellement enlevé, la coquille ou la vanne de contrôle coopère avec la fente (49) pour déterminer le débit d'eau qui traverse cette dernière.

5. Vanne à abreuvoir selon la revendication 4, caractérisée en ce que la fente (49) est une fente essentiellement verticale.

6. Vanne à abreuvoir selon l'une quelconque des revendications précédentes, caractérisée en ce qu'un second membre tubulaire (48) est situé à l'intérieur du membre tubulaire (43), tout en laissant libre une seconde chambre cylindrique étroite (47) fermée à sa base, ledit second membre tubulaire (48) étant ouvert à ses extrémités de base et de sommet et ayant son sommet situé au moins partiellement en dessous du sommet du premier membre tubulaire (43).

7. Vanne à abreuvoir selon l'une quelconque des revendications précédentes 3-6, caractérisée en ce que la vanne de contrôle (50) est réalisée en plastique.

8. Vanne à abreuvoir selon l'une quelconque des revendications précédentes 3-6, caractérisée en ce que la vanne de contrôle (50) est prévue au sommet de la vanne à abreuvoir, avec des moyens d'actionnement en vue de faire tourner la vanne de contrôle.

9. Vanne à abreuvoir selon la revendication 8, caractérisée en ce que les moyens d'actionnement comportent une pluralité de nervures (55) en saillie débordant du sommet de la vanne de contrôle.

10. Vanne à abreuvoir selon la revendication 9, caractérisée en ce qu'au moins deux nervures (55) parallèles sont prévues, et forment ensemble un sillon (56, 57).

11. Vanne à abreuvoir selon la revendication 9 ou 10, caractérisée en ce que les nervures (55) forment des moyens de marquage de position qui coopèrent avec des marquages prévus sur le bord supérieur de la coquille des moyens de collecte d'impuretés.

12. Vanne à abreuvoir selon l'une quelconque des revendications précédentes, caractérisée en ce que le corps de vanne (30) comporte un collier (31) sur son bord supérieur et en ce qu'un collier (41) formé sur le bord supérieur de la coquille des moyens de collecte d'impuretés repose sur le collier (31) du corps de vanne.

13. Vanne à abreuvoir selon l'une quelconque des revendications précédentes, caractérisée en ce que le corps de vanne (30) comporte un épaulement (66) s'étendant circonférentiellement en dessous du bord inférieur de la coquille des moyens de collecte d'impuretés, l'épaulement (66) formant un siège de vanne pour un disque de vanne (61) reposant sur l'épaulement, ce disque étant repoussé contre le siège de vanne par des moyens à ressort (60).

14. Vanne à abreuvoir selon la revendication 13, caractérisée en ce que les moyens à ressort (60) comportent un réssort de compression (60) agencé entre le disque de vanne (61) et la base de la première chambre cylindrique étroite (45).

15. Vanne à abreuvoir selon la revendication 13 ou 14, caractérisée en ce que le disque de vanne (61) comporte en son sommet des moyens de centrage (62, 63) pour le ressort de compression (60).

16. Vanne à abreuvoir selon l'une quelconque des revendications 13-15, caractérisée en ce que le disque de vanne (61) comporte un pointeau d'actionnement (64) traversant l'ouverture laissée libre par l'épaulement (66) et s'étend au-delà de l'extrémité inférieure du corps de vanne.

17. Vanne à abreuvoir selon la revendication 16, caractérisée en ce que le disque de vanne (61) et le pointeau d'actionnement (64) sont formés d'une seule pièce en plastique.

18. Vanne à abreuvoir selon l'une quelconque des revendications 13-17, caractérisée en ce que le disque de vanne (61) est doté de saillies radiales (62, 63).

19. Vanne à abreuvoir selon l'une quelconque des revendications précédentes, caractérisée en ce que l'extrémité inférieure du corps de vanne (30) comporte en position montée un patte suspendue (68) sur le côté orienté vers le front de l'animal.

20. Vanne à abreuvoir selon l'une quelconque des revendications précédentes, caractérisée en ce que le corps de vanne (30) est réalisé en plastique.

21. Vanne à abreuvoir selon l'une quelconque des revendications précédentes, caractérisée en ce qu'à proximité du sommet du corps de vanne (30), une pièce cylindrique de liaison (34) filetée extérieurement est ajustée par serrage autour du corps de vanne, ladite pièce de liaison comportant à sa base deux brides opposées (36, 37) s'étendant vers l'extérieur.

22. Vanne à abreuvoir selon la revendication 21, caractérisée en ce que la pièce de liaison (34) possède un creux (33) dans son bord supérieur, ce creux coopérant avec une saille (32) du corps de vanne pour empêcher la rotation de la pièce de liaison.

23. Vanne à abreuvoir selon la revendication 21, caractérisée en ce qu'au moins la partie supérieure du corps de vanne (30) comporte des nervures longitudinales basses.

24. Vanne à abreuvoir selon la revendication 21, caractérisée en ce que le corps de vanne (30), les moyens de collecte d'impuretés, le membre de vanne (61) et le membre d'actionnement (64) sont réalisés en plastique, la pièce de liaison (34) étant réalisée en laiton.
